(19) Europäisches Patentamt
European Patent Office
Office européen des brevets

(11) EP 2 145 166 B1

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(21) Anmeldenummer: **08750232.4**

(22) Anmeldetag: **09.05.2008**

(51) Int Cl.:
*G01K 7/18* *(2006.01)*

(86) Internationale Anmeldenummer:
**PCT/EP2008/055748**

(87) Internationale Veröffentlichungsnummer:
**WO 2008/138887 (20.11.2008 Gazette 2008/47)**

(54) **WIDERSTANDSTHERMOMETER**

RESISTANCE THERMOMETER

THERMOMÈTRE À RÉSISTANCE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007 DE 102007023434**

(43) Veröffentlichungstag der Anmeldung:
**20.01.2010 Patentblatt 2010/03**

(60) Teilanmeldung:
**17167473.2**

(73) Patentinhaber: **Innovative Sensor Technology IST AG**
**9630 Wattvil (CH)**

(72) Erfinder: **HOLOUBEK, Jiri**
**CH-9630 Wattwil (CH)**

(74) Vertreter: **Andres, Angelika Maria**
**Endress+Hauser(DE)Holding,**
**Patserve,**
**Colmarer Strasse 6**
**79576 Weil am Rhein (DE)**

(56) Entgegenhaltungen:
**EP-A- 0 471 138     DE-A1- 4 020 383**
**DE-A1- 4 300 084     DE-C1- 19 540 194**
**JP-A- 2 058 304     JP-A- 2004 239 700**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Widerstandthermometer, bestehend aus mehreren Bestandteilen, mindestens umfassend zumindest ein Substrat, welches im Wesentlichen aus einem Material besteht, dessen Wärmeausdehnungskoeffizient im Wesentlichen größer als 10,5 ppm/K ist, mindestens ein Widerstandselement, welches auf dem Substrat angeordnet ist und mindestens eine elektrisch isolierende Trennschicht, welche im Wesentlichen zwischen dem Widerstandselement und dem Substrat angeordnet ist.

Bekannt sind im Stand der Technik Temperaturmessgeräte, bei welchen der elektrische und von der Temperatur abhängige Widerstand eines Widerstandelements gemessen und ausgewertet wird. Für die Auswertung ist es erforderlich, dass die Temperatur-Widerstands-Kurve, d.h. die diesbezügliche Kennlinie des Elements bekannt ist.

Bekannt sind insbesondere Widerstandselemente, welche mit Dünnschichttechniken auf ein elektrisch isolierendes Substrat aufgebracht werden. Die Dünnschicht besteht in der Regel aus Platin oder Nickel mit oder ohne Dotierung und das Substrat besteht zumeist aus $Al_2O_3$.

Im Stand der Technik ist bereits die Auswirkung der Beschaffenheit des Substrats auf die Kennlinie des darauf befindlichen Widerstandselements bekannt. Den beiden Dokumenten DE 43 00 084 A1 und DE 195 40 194 C1 lässt sich beispielsweise entnehmen, dass die Kennlinie des Widerstandsthermometers die gewünschten Eigenschaften aufweist, wenn der Wärmeausdehnungskoeffizient (TCE) des Substrats aus Magnesiumtitanat im Bereich zwischen 8,5 und 10,5 ppm/K liegt. Ein weiteres Widerstandsthermometer ist im Dokument EP 0 471 138 A2 beschrieben. Bei den Ausgestaltungen des Standes der Technik hat das Substrat immer noch einen sehr großen Einfluss auf die Kennlinie bzw. auf den TCR-Wert, d.h. den Temperaturkoeffizienten des Widerstandsthermometers. Insbesondere ist es im Stand der Technik nicht möglich, den TCR-Wert des Widerstandsthermometers in die Nähe des Materials des Widerstandselements als Bulk-Material zu bringen. Bulk-Material bezieht sich auf einen Zustand eines Materials im Gegensatz zu Dünnschicht oder Pulverform und bedeutet, dass das Material in einer Form vorliegt, so dass es sich als unendlich große Menge in allen drei Dimensionen aus atomarer Sicht betrachten lässt. Beispielsweise ist es gemäß dem Stand der Technik praktisch nicht möglich, Platinmesswiderstände mit einem TCR-Wert im Bereich oberhalb 3900 ppm/K zu erzielen, wobei solche Werte typisch für gewickelte Messwiderstände aus reinem Platin sind. Weiterhin weicht die Form der Kennlinie auch bei Widerstandsthermometern mit niedrigeren TCR-Werten (typisch bei 3850 ppm/K) von der gemäß DIN IEC 751 vorgeschriebenen Form ab. Dies hat zur Folge, dass insbesondere bei breiteren Temperaturbereichen bzw. bei hohen Genauigkeitsanforderungen das vorgeschriebene Toleranzband verlassen wird. Weitere negative Effekte von mangelhafter Materialanpassung besteht in der Hysterese (Memory-Effekt) und in einer mangelhafte Langzeitstabilität der Messwerte.

Der Erfindung liegt die Aufgabe zugrunde, ein Widerstandsthermometer anzugeben, dessen Temperaturkoeffizient (TCR) oberhalb von 3900 ppm/K liegt.

Die Aufgabe wird erfindungsgemäß durch ein Widerstandsthermometer gemäß Anspruch 1 gelöst, wobei die Bestandteile des Widerstandsthermometers derartig ausgestaltet und aufeinander abgestimmt sind, dass ein resultierender effektiver Wärmeausdehnungskoeffizient $TCE_{eff}$ des Widerstandsthermometers einem vorgebbaren Wert entspricht, wobei der effektive Wärmeausdehnungskoeffizient $TCE_{eff}$ des Widerstandsthermometers im Wesentlichen durch folgende Formel näherungsweise gegeben ist:

$$TCE_{eff} = \frac{\sum_{i=1}^{N} TCE_i * d_i * E_i * F_i}{\sum_{i=1}^{N} d_i * E_i * F_i},$$

wobei N die Anzahl der Bestandteile des Widerstandsthermometers ist, wobei die Laufzahl i die einzelnen Bestandteile bezeichnet, wobei $TCE_i$ den Wärmeausdehnungskoeffizienten, $d_i$ die Dicke und $E_i$ die Elastizität der einzelnen Bestandteile bezeichnet, und wobei $F_i$ einen geometrischen Faktor berücksichtigt und dass der effektive Wärmeausdehnungskoeffizient $TCE_{eff}$ größer als oder gleich dem Wärmeausdehnungskoeffizient des Bulk-Metalls des Widerstandselements ist. Der Aufbau des Widerstandsthermometers besteht somit zumindest aus Substrat - Trennschicht - Widerstandselement. Die Trennschicht ist vor allem dafür erforderlich, um einen elektrischen Kontakt zwischen dem Substrat und der Widerstandselement zu verhindern. Der geometrische Faktor $F_i$ der einzelnen Bestandteile liegt zwischen 0 und 1 und berücksichtigt unter anderem die räumliche Anordnung der einzelnen Komponenten bzw. der einzelnen Schichten. Die Formel gibt dabei eine gewichtete Interpolation über das Widerstandsthermometer wieder.

Eine Ausgestaltung der Erfindung sieht vor, dass das Substrat im Wesentlichen aus einem Material besteht, dessen Wärmeausdehnungskoeffizient im Wesentlichen größer als 11 ppm/K ist.

Eine Ausgestaltung der Erfindung beinhaltet, dass das Substrat im Wesentlichen aus einem Material besteht, dessen Wärmeausdehnungskoeffizient im Wesentlichen zwischen 10,5 und 13,5 ppm/K liegt.

Eine Ausgestaltung der Erfindung sieht vor, dass das Widerstandselement mit einer Dünnschichttechnik auf dem Substrat aufgetragen ist. Beispiele für solche Dünnschichttechniken sind Sputtern oder Aufdampfen.

Eine Ausgestaltung der Erfindung beinhaltet, dass das Widerstandselement im Wesentlichen aus Platin und/oder Nickel besteht.

Eine Ausgestaltung der Erfindung sieht vor, dass das Widerstandselement frei von einer Fremdlegierung oder mit einer Fremdlegierung versehen ist.

Eine Ausgestaltung der Erfindung beinhaltet, dass das Widerstandselement eine Schichtdicke zwischen 0,1 $\mu$m und 5 $\mu$m aufweist.

Eine weitere Ausgestaltung der Erfindung sieht vor, dass das Widerstandselement eine Schichtdicke zwischen 0,1 $\mu$m und 2 $\mu$m aufweist.

Eine Ausgestaltung der Erfindung sieht vor, dass die elektrisch isolierende Trennschicht aus Glas, Keramik oder Glaskeramik besteht.

Eine Ausgestaltung der Erfindung beinhaltet, dass die elektrisch isolierende Trennschicht eine Dicke zwischen 0,5 $\mu$m und 100 $\mu$m aufweist.

Eine Ausgestaltung der Erfindung sieht vor, dass die elektrisch isolierende Trennschicht eine Dicke zwischen 0,5 $\mu$m und 50 $\mu$m aufweist.

Eine Ausgestaltung der Erfindung sieht vor, dass die elektrisch isolierende Trennschicht einen Wärmeausdehnungskoeffizienten zwischen 0,4 und 8 ppm/K aufweist.

Eine Ausgestaltung der Erfindung beinhaltet, dass mindestens eine elektrisch isolierende Abdeckung vorgesehen ist, welche im Wesentlichen auf der von dem Substrat abgewandten Seite des Widerstandselements angeordnet ist.

Eine Ausgestaltung der Erfindung sieht vor, dass die elektrisch isolierende Abdeckung im Wesentlichen aus einem Glas, Keramik, Glaskeramik oder einer Polymerschicht besteht.

Eine Ausgestaltung der Erfindung beinhaltet, dass die elektrisch isolierende Abdeckung eine Dicke zwischen 0,5 $\mu$m und 100 $\mu$m aufweist.

Eine Ausgestaltung der Erfindung sieht vor, dass das Substrat im Wesentlichen aus Zirkoniumoxid besteht. Zirkoniumoxid (ZrO$_2$) wird ab einer Temperatur oberhalb von 200°C elektrisch leitfähig, so dass die oben genannte Trennschicht zwischen dem Substrat und dem Widerstandselement vorteilhaft ist.

Eine Ausgestaltung der Erfindung beinhaltet, dass die Dicke des Substrats zwischen 0,15 und 1,0 mm liegt.

Eine Ausgestaltung der Erfindung beinhaltet, dass die Dicke des Substrats zwischen 0,15 und 0,5 mm liegt.

Eine Ausgestaltung der Erfindung beinhaltet, dass die Dicke des Substrats zwischen 0,2 und 1,0 mm liegt. Solche dünnen Substrate, insbesondere aus Zirkoniumoxid haben beispielsweise die Vorteile, dass sie eine geringe Hysterese des Widerstandsthermometers mit sich bringen und auch zu einer verbesserten Kennlinie führen. Ein Substrat aus Zirkoniumoxid mit einer Dicke von 0,38 mm führt beispielsweise zu einem TCR-Wert von ungefähr 3913 ppm/K.

Eine Ausgestaltung der Erfindung sieht vor, dass das Substrat im Wesentlichen aus Zirkoniumoxid besteht, dass die Dicke des Substrats zwischen 0,2 und 1,0 mm liegt, und dass die elektrisch isolierende Trennschicht im Wesentlichen zwischen dem Widerstandselement und dem Substrat angeordnet ist. Die Trennschicht verhindert den elektrischen Kontakt ist, da Zirkonium ab einer Temperatur oberhalb von ca. 200°C elektrisch leitfähig wird. Vorteilhaft ist die Ausgestaltung, dass das Substrat im Wesentlichen aus einem Material besteht, dessen Wärmeausdehnungskoeffizient im Wesentlichen zwischen 10,5 und 13,5 ppm/K liegt. Die hier genannte Ausgestaltung bringt es mit sich, dass das Widerstandsthermometer einen Temperaturkoeffizienten oberhalb von 3900 ppm/K aufweist.

Eine Ausgestaltung der Erfindung sieht vor, dass auf der von dem Widerstandselement abgewandten Seite des Substrats mindestens eine innere Ausgleichsschicht vorgesehen ist. Die innere Ausgleichsschicht dient der Kompensation von Wärmeausdehnungseffekten der Trennschicht.

Eine Ausgestaltung der Erfindung beinhaltet, dass die innere Ausgleichsschicht in Bezug auf eine durch die Temperatur verursachte Änderung der Ausdehnung im Wesentlichen gleich wie die Trennschicht beschaffen ist.

Eine Ausgestaltung der Erfindung sieht vor, dass die innere Ausgleichsschicht im Wesentlichen aus dem gleichen Material wie die Trennschicht besteht.

Eine Ausgestaltung der Erfindung sieht vor, dass auf der von dem Widerstandselement abgewandten Seite des Substrats mindestens eine äußere Ausgleichsschicht vorgesehen ist. Die äußere Ausgleichsschicht dient der Kompensation von Wärmeausdehnungseffekten der Abdeckung.

Eine Ausgestaltung der Erfindung beinhaltet, dass die äußere Ausgleichsschicht auf der vom Substrat abgewandten Seite der inneren Ausgleichseinheit angeordnet ist.

Eine Ausgestaltung der Erfindung sieht vor, dass die äußere Ausgleichsschicht in Bezug auf eine durch die Temperatur verursachte Änderung der Ausdehnung im Wesentlichen gleich wie die Abdeckung beschaffen ist.

Eine Ausgestaltung der Erfindung beinhaltet, dass die äußere Ausgleichsschicht in Wesentlichen aus dem gleichen Material wie die Abdeckung besteht.

Eine Ausgestaltung der Erfindung beinhaltet, dass die Abdeckung im Wesentlichen aus dem gleichem Material wie die Trennschicht besteht.

Eine Ausgestaltung der Erfindung sieht vor, dass das Substrat im Wesentlichen aus Zirkoniumoxid besteht, dass das Substrat eine Dicke zwischen 0,3 und 0,5 mm aufweist, dass das Widerstandselement im Wesentlichen aus Platin besteht, dass das Widerstandselement eine Dicke zwischen 0,45 und 2 $\mu$m aufweist, dass die Trennschicht eine Dicke zwischen 0,5 und 40 $\mu$m aufweist und im Wesentlichen aus einer Glaskeramik mit einem Wärmeausdehnungskoeffizienten zwischen 6 und 7,5 ppm/K besteht, und dass die Abdeckung eine Dicke zwischen 0,5 und 40 μm aufweist und im Wesentlichen aus einer Glaskeramik mit einem Wärmeausdehnungskoeffizienten zwischen 6 und 7,5 ppm/K besteht. Eine solche Anordnung führt dazu, dass der Temperaturkoeffizienten des Widerstandsthermometers zwischen 3910 und 3925 ppm/K liegt.

Eine Ausgestaltung der Erfindung sieht vor, dass das Substrat im Wesentlichen aus Zirkoniumoxid besteht, dass das Substrat eine Dicke zwischen 0,3 und 0,7 mm aufweist, dass das Widerstandselement im Wesentlichen aus Platin besteht, dass das Widerstandselement eine Dicke zwischen 0,45 und 2 μm aufweist, dass die Trennschicht eine Dicke zwischen 5 und 40 μm aufweist und im Wesentlichen aus einer Glaskeramik mit einem Wärmeausdehnungskoeffizienten zwischen 6 und 7,5 ppm/K besteht, und dass die Abdeckung eine Dicke zwischen 5 und 40 μm aufweist und im Wesentlichen aus einer Glaskeramik mit einem Wärmeausdehnungskoeffizienten zwischen 6 und 7,5 ppm/K besteht. Eine solche Anordnung führt dazu, dass der Temperaturkoeffizienten des Widerstandsthermometers zwischen 3910 und 3925 ppm/K liegt. Ein Beispiel zum Erleichtern des Verständnisses der Erfindung beinhaltet, dass das Substrat im Wesentlichen aus Zirkoniumoxid besteht, dass das Substrat eine Dicke zwischen 0,3 und 0,5 mm aufweist, dass das Widerstandselement im Wesentlichen aus Platin mit mindestens einer Fremdlegierung besteht, dass das Widerstandselement eine Dicke zwischen 0,45 und 2 μm aufweist, dass die Trennschicht eine Dicke zwischen 0,5 und 40 μm aufweist und im Wesentlichen aus einer Glaskeramik mit einem Wärmeausdehnungskoeffizienten zwischen 6 und 7,5 ppm/K besteht, und dass die Abdeckung eine Dicke zwischen 5 und 40 μm aufweist und im Wesentlichen aus einer Glaskeramik mit einem Wärmeausdehnungskoeffizienten zwischen 6 und 7,5 ppm/K besteht. Eine solche Anordnung erzeugt einen Temperaturkoeffizienten des Widerstandsthermometers von 3850 ppm/K mit einer Kennlinie gemäß DIN IEC 751. Ein weiteres Beispiel beinhaltet, dass das Substrat im Wesentlichen aus Zirkoniumoxid besteht, dass das Substrat eine Dicke zwischen 0,3 und 0,7 mm aufweist, dass das Widerstandselement im Wesentlichen aus Platin mit mindestens einer Fremdlegierung besteht, dass das Widerstandselement eine Dicke zwischen 0,45 und 2 μm aufweist, dass die Trennschicht eine Dicke zwischen 5 und 40 μm aufweist und im Wesentlichen aus einer Glaskeramik mit einem Wärmeausdehnungskoeffizienten zwischen 6 und 7,5 ppm/K besteht, und dass die Abdeckung eine Dicke zwischen 5 und 40 μm aufweist und im Wesentlichen aus einer Glaskeramik mit einem Wärmeausdehnungskoeffizienten zwischen 6 und 7,5 ppm/K besteht. Eine solche Anordnung erzeugt einen Temperaturkoeffizienten des Widerstandsthermometers von 3850 ppm/K mit einer Kennlinie gemäß DIN IEC 751.

Eine Ausgestaltung der Erfindung sieht vor, dass das Substrat im Wesentlichen aus Zirkoniumoxid besteht, dass das Substrat eine Dicke zwischen 0,3 und 0,5 mm aufweist, dass das Widerstandselement im Wesentlichen aus Nickel besteht, dass das Widerstandselement eine Dicke zwischen 0,1 und 2 μm aufweist, dass die Trennschicht eine Dicke zwischen 0,5 und 40 μm aufweist, dass die Trennschicht im Wesentlichen aus einer Glaskeramik besteht, dass die Trennschicht einen Wärmeausdehnungskoeffizienten zwischen 6 und 7,5 ppm/K aufweist, und dass die Abdeckung im Wesentlichen aus einem Polymer oder aus Glas besteht. Eine solche Anordnung bewirkt einen Temperaturkoeffizienten des Widerstandsthermometers zwischen 6700 und 6740 ppm/K.

Eine Ausgestaltung der Erfindung sieht vor, dass das Substrat im Wesentlichen aus Zirkoniumoxid besteht, dass das Substrat eine Dicke zwischen 0,3 und 0,7 mm aufweist, dass das Widerstandselement im Wesentlichen aus Nickel besteht, dass das Widerstandselement eine Dicke zwischen 0,3 und 2 μm aufweist, dass die Trennschicht eine Dicke zwischen 5 und 40 μm aufweist, dass die Trennschicht im Wesentlichen aus einer Glaskeramik besteht, dass die Trennschicht einen Wärmeausdehnungskoeffizienten zwischen 6 und 7,5 ppm/K aufweist, und dass die Abdeckung im Wesentlichen aus einem Polymer oder aus Glas besteht. Eine solche Anordnung bewirkt einen Temperaturkoeffizienten des Widerstandsthermometers zwischen 6700 und 6740 ppm/K.

Eine Ausgestaltung der Erfindung beinhaltet, dass das Substrat im Wesentlichen aus Zirkoniumoxid besteht, weiches zwischen 3Mol-% und 8Mol-% mit Yttrium stabilisiert ist.

Eine Ausgestaltung der Erfindung sieht vor, dass das Substrat im Wesentlichen aus Zirkoniumoxid besteht, welches zwischen 3Mol-% und 11Mol-% mit Scandium stabilisiert ist.

Eine Ausgestaltung der Erfindung beinhaltet, dass das Substrat im Wesentlichen aus Zirkoniumoxid besteht, welches zwischen 0,5Mol-% und 4Mol-% mit Magnesium stabilisiert ist.

Die Erfindung wird anhand der nachfolgenden Zeichnung näher erläutert. Es zeigt:

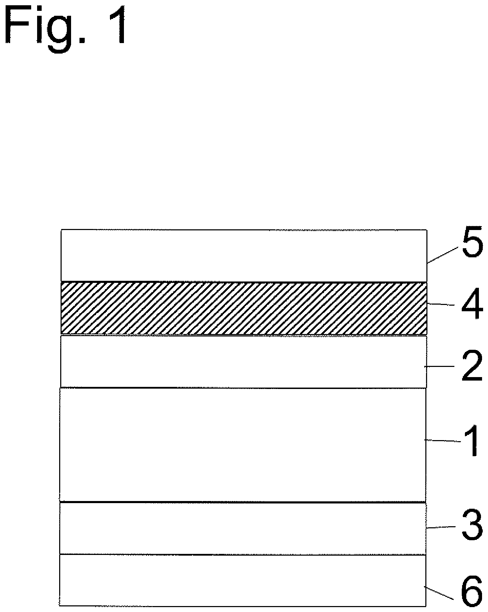

Fig. 1: eine schematische Darstellung eines Schnitts durch ein erfindungsgemäßes Widerstandsthermometer.

In der Fig. 1 ist ein Schnitt durch ein schematisches Widerstandsthermometer dargestellt. Elektrische Kontakte, Gehäuse usw. sind somit nicht dargestellt. Die Temperatur wird dabei durch Auswertung des elektrischen Widerstandes ermittelt. Hierfür ist Wissen über die Kennlinie des Widerstandsthermometers erforderlich.

Das Widerstandsthermometer oder allgemein der Temperatursensor besteht hier aus einem Substrat 1, auf welchem eine elektrisch isolierende Trennschicht 2 aufgebracht. Oberhalb der Trennschicht 2 befindet sich das Widerstandselement 4, welches der eigentlichen Messung dient. Dabei handelt es sich um eine Metallschicht, welche eine passende Struktur, z.B. ein Mäandermuster aufweist und durch Dünnschicht- oder Dickschichttechniken aufgebracht wird. Die Trennschicht 2 ist insbesondere für den Fall vorteilhaft, dass das Substrat aus Zirkoniumoxid ($ZrO_2$) besteht, welches bei einer Temperatur oberhalb von 200°C elektrisch leitend wird. D.h. die Trennschicht 2 verhindert den direkten elektrischen Kontakt zwischen dem ggf. leitenden Substrat 1 und dem Widerstandselement 4, welches hier insbesondere als Schicht ausgestaltet und verstanden wird. Oberhalb des Widerstandselements ist eine Abdeckung 5 vorgesehen, welche u.a. der Passivierung und allgemein dem Schutz der Metallschicht des Widerstandselements 4 dient.

In der hier gezeigten Darstellung sind weiterhin eine innere 3 und eine äußere Ausgleichsschicht 6 vorgesehen, welche jeweils die durch die Temperatur bedingten Ausdehnungsänderungen der Trennschicht 2 bzw. der Abdeckung 5 kompensieren. Dafür weisen die Ausgleichsschichten 3, 6 in Bezug auf die thermischen Ausdehnungseigenschaften im Wesentlichen die gleichen Eigenschaften wie die Trennschicht 2 bzw. die Abdeckung 5 auf. Vorzugsweise besteht die innere Ausgleichsschicht aus dem gleichen Material wie die Trennschicht 2 und weisen beide Schichten 2, 5 die gleiche Dimensionierung auf. Entsprechendes gilt für die äußere Ausgleichsschicht 6 und die Abdeckung 5.

Das hier gezeigte Widerstandsthermometer besteht somit insgesamt aus 6 Schichten. Für das weitere Verständnis seien diese wie folgt nummeriert: 1: Substrat; 2: Trennschicht; 3: innere Ausgleichsschicht; 4: Widerstandselement; 5: Abdeckung und 6: äußere Ausgleichsschicht. Jeder dieser Schichten weist eine Dicke $d_i$, ein Elastizitätsmodul $E_i$ und einen Wärmeausdehnungskoeffizienten $TCE_i$ auf. Weiterhin sei jede Schicht durch einen geometrische Formfaktor $F_i$ zwischen 0 und 1 gekennzeichnet, welcher die räumliche Anordnung der einzelnen Schichten berücksichtigt. Aus diesen Größen ergibt sich näherungsweise der effektive Wärmeausdehnungskoeffizient $TCE_{eff}$ der gesamten Anordnung, also des gesamten Widerstandsthermometers zu:

$$TCE_{eff} = \frac{\sum_{i=1}^{N} TCE_i * d_i * E_i * F_i}{\sum_{i=1}^{N} d_i * E_i * F_i}$$

Dabei sollte insbesondere gelten, dass $TCE_{eff}$ >= $TCE_{Bun-Metall}$ des Materials des Widerstandselements 4 als Bulk-Metall, der Wärmeausdehnungskoeffizient $TCE_{eff}$ des Widerstandsthermometers sollte größer als oder gleich dem Wärmeausdehnungskoeffizient $TCE_{Bulk-Metall}$ des Materials des Widerstandselements 4 als Bulk-Metall sein.

Dabei bezieht sich in der obigen Formel die Laufzahl i auf die einzelnen Schichten. N ist im gezeigten Fall gleich 6.

Ausgehend von dieser Formel lässt sich dann das Thermometer passend zum erforderlichen Temperaturkoeffizienten des Widerstandsthermometers dimensionieren.

Insbesondere hat sich gezeigt, dass der Temperaturkoeffizient des Widerstandsthermometers mit der Schichtdicke des Substrats 1 zunimmt, wobei eine Erhöhung der Dicke der Trennschicht 2 den Temperaturkoeffizienten wiederum verkleinert.

## Bezugszeichenliste

1    Substrat
2    Trennschicht
3    Innere Ausgleichsschicht
4    Widerstandselement
5    Abdeckung
6    Äußere Ausgleichsschicht

## Patentansprüche

1.   Widerstandthermometer, bestehend aus mehreren Bestandteilen, mindestens umfassend zumindest ein Substrat (1), welches im Wesentlichen aus einem Material besteht, dessen Wärmeausdehnungskoeffizient im Wesentlichen größer als 10,5 ppm/K ist, mindestens ein Widerstandselement (4), welches auf dem Substrat (1) angeordnet ist, und mindestens eine elektrisch isolierende Trennschicht (2), welche im Wesentlichen zwischen dem Widerstandselement (4) und dem Substrat (1) angeordnet ist, wobei die Bestandteile (1, 2, 3, 4, 5, 6) des Widerstandsthermometers derartig ausgestaltet und aufeinander abgestimmt sind, dass ein resultierender effektiver Wärmeausdehnungskoeffizient $TCE_{eff}$ des Widerstandsthermometers einem vorgebbaren Wert entspricht, wobei der effektive Wärmeausdehnungskoeffizient $TCE_{eff}$ des Widerstandsthermometers im Wesentlichen durch folgende Formel näherungsweise gegeben ist:

$$TCE_{eff} = \frac{\sum_{i=1}^{N} TCE_i * d_i * E_i * F_i}{\sum_{i=1}^{N} d_i * E_i * F_i} \quad ,$$

wobei N die Anzahl der Bestandteile des Widerstandsthermometers ist, wobei die Laufzahl i die einzelnen Bestandteile bezeichnet, wobei $TCE_i$ den Wärmeausdehnungskoeffizienten, $d_i$ die Dicke und $E_i$ die Elastizität der einzelnen Bestandteile bezeichnet, und wobei $F_i$ einen geometrischen Faktor be-

rücksichtigt,

dass der effektive Wärmeausdehnungskoeffizient $TCE_{eff}$ größer als oder gleich dem Wärmeausdehnungskoeffizient des Bulk-Metalls des Widerstandselements (4) ist,

**dadurch gekennzeichnet,**

**dass** ausgehend von der Formel für $TCE_{eff}$ das Widerstandsthermometer passend zu einem erforderlichen Temperaturkoeffizienten TCR oberhalb 3900 ppm/K dimensioniert ist.

2. Widerstandthermometer nach Anspruch 1,
**dadurch gekennzeichnet,**
**dass** das Substrat (1) im Wesentlichen aus einem Material besteht, dessen Wärmeausdehnungskoeffizient im Wesentlichen zwischen 10,5 und 13,5 ppm/K liegt.

3. Widerstandthermometer nach mindestens einem der vorhergehenden Ansprüche,
**dadurch gekennzeichnet,**
**dass** das Widerstandselement (4) eine Schichtdicke zwischen 0,1 $\mu$m und 2 $\mu$m aufweist.

4. Widerstandthermometer nach Anspruch 1,
**dadurch gekennzeichnet,**
**dass** die elektrisch isolierende Trennschicht (2) eine Dicke zwischen 0,5 $\mu$m und 50 $\mu$m aufweist.

5. Widerstandthermometer nach Anspruch 1 oder 4,
**dadurch gekennzeichnet,**
**dass** die elektrisch isolierende Trennschicht (2) einen Wärmeausdehnungskoeffizienten zwischen 0,4 und 8 ppm/K aufweist.

6. Widerstandthermometer nach mindestens einem der vorhergehenden Ansprüche,
**dadurch gekennzeichnet,**
**dass** mindestens eine elektrisch isolierende Abdeckung (5) vorgesehen ist, welche im Wesentlichen auf der von dem Substrat (1) abgewandten Seite des Widerstandselements (4) angeordnet ist.

7. Widerstandthermometer nach Anspruch 6,
**dadurch gekennzeichnet,**
**dass** die elektrisch isolierende Abdeckung (5) eine Dicke zwischen 0,5 $\mu$m und 100 $\mu$m aufweist.

8. Widerstandthermometer nach mindestens einem der vorhergehenden Ansprüche,
**dadurch gekennzeichnet,**
**dass** das Substrat (1) im Wesentlichen aus Zirkoniumoxid besteht.

9. Widerstandthermometer nach mindestens einem der vorhergehenden Ansprüche,
**dadurch gekennzeichnet,**
**dass** die Dicke des Substrats (1) zwischen 0,15 und 0,5 mm liegt.

10. Widerstandthermometer nach mindestens einem der vorhergehenden Ansprüche,
**dadurch gekennzeichnet,**
**dass** auf der von dem Widerstandselement (4) abgewandten Seite des Substrats (1) mindestens eine innere Ausgleichsschicht (3) vorgesehen ist und dass die innere Ausgleichsschicht (3) in Bezug auf eine durch die Temperatur verursachte Änderung der Ausdehnung im Wesentlichen gleich wie die Trennschicht (2) beschaffen ist.

11. Widerstandthermometer nach mindestens einem der vorhergehenden Ansprüche,
**dadurch gekennzeichnet,**
**dass** auf der von dem Widerstandselement (4) abgewandten Seite des Substrats (1) mindestens eine äußere Ausgleichsschicht (6) vorgesehen ist und dass die äußere Ausgleichsschicht (6) in Bezug auf eine durch die Temperatur verursachte Änderung der Ausdehnung im Wesentlichen gleich wie die Abdeckung (5) beschaffen ist.

12. Widerstandthermometer nach mindestens einem der vorhergehenden Ansprüche,
**dadurch gekennzeichnet,**
**dass** das Substrat (1) im Wesentlichen aus Zirkoniumoxid besteht,
**dass** das Substrat (1) eine Dicke zwischen 0,3 und 0,5 mm aufweist,
**dass** das Widerstandselement (4) im Wesentlichen aus Platin besteht,
**dass** das Widerstandselement (4) eine Dicke zwischen 0,45 und 2 $\mu$m aufweist,
**dass** die Trennschicht (2) eine Dicke zwischen 0,5 und 40 $\mu$m aufweist und im Wesentlichen aus einer Glaskeramik mit einem Wärmeausdehnungskoeffizienten zwischen 6 und 7,5 ppm/K besteht, und
**dass** die Abdeckung (5) eine Dicke zwischen 5 und 40 $\mu$m aufweist und im Wesentlichen aus einer Glaskeramik mit einem Wärmeausdehnungskoeffizienten zwischen 6 und 7,5 ppm/K besteht.

13. Widerstandthermometer nach mindestens einem der Ansprüche 1-11,
**dadurch gekennzeichnet,**
**dass** das Substrat (1) im Wesentlichen aus Zirkoniumoxid besteht,
**dass** das Substrat (1) eine Dicke zwischen 0,3 und 0,5 mm aufweist,
**dass** das Widerstandselement (4) im Wesentlichen aus Nickel besteht,
**dass** das Widerstandselement (4) eine Dicke zwischen 0,1 und 2 $\mu$m aufweist, dass die Trennschicht (2) eine Dicke zwischen 0,5 und 40 $\mu$m aufweist,
**dass** die Trennschicht (2) im Wesentlichen aus einer Glaskeramik besteht, dass die Trennschicht (2) einen Wärmeausdehnungskoeffizienten zwischen 6 und 7,5 ppm/K aufweist,
und
**dass** die Abdeckung (5) im Wesentlichen aus einem Polymer oder aus Glas besteht.

14. Widerstandthermometer nach mindestens einem der vorhergehenden Ansprüche,
**dadurch gekennzeichnet,**
**dass** das Substrat (1) im Wesentlichen aus Zirkoniumoxid besteht, welches zwischen 3Mol-% und 11Mol-% mit Scandium oder zwischen 0,5Mol-% und 4mol-% mit Magnesium stabilisiert ist.

15. Verfahren zur Herstellung eines Widerstandthermometers, wobei das Widerstandthermometers aus mehreren Bestandteilen besteht,
mindestens umfassend zumindest ein Substrat (1), welches im Wesentlichen aus einem Material besteht, dessen Wärmeausdehnungskoeffizient im Wesentlichen größer als 10,5 ppm/K ist, mindestens ein Widerstandselement (4), welches auf dem Substrat (1) angeordnet wird, und mindestens eine elektrisch isolierende Trennschicht (2), welche im Wesentlichen zwischen dem Widerstandselement (4) und dem Substrat (1) angeordnet wird,
wobei die Bestandteile (1, 2, 3, 4, 5, 6) des Widerstandsthermometers derartig ausgestaltet und aufeinander abgestimmt werden, dass ein resultierender effektiver Wärmeausdehnungskoeffizient $TCE_{eff}$ des Widerstandsthermometers einem vorgebbaren Wert entspricht, wobei der effektive Wärmeausdehnungskoeffizient $TCE_{eff}$ des Widerstandsthermometers im Wesentlichen durch folgende Formel näherungsweise gegeben ist:

$$TCE_{eff} = \frac{\sum_{i=1}^{N} TCE_i * d_i * E_i * F_i}{\sum_{i=1}^{N} d_i * E_i * F_i} \quad ,$$

wobei N die Anzahl der Bestandteile des Widerstandsthermometers ist, wobei die Lautzahl i die einzelnen Bestandteile bezeichnet, wobei $TCE_i$ den Wärmeausdehnungskoeffizienten, $d_i$ die Dicke und $E_i$ die Elastizität der einzelnen Bestandteile bezeichnet, und wobei $F_i$ einen geometrischen Faktor berücksichtigt,
dass der effektive Wärmeausdehnungskoeffizient $TCE_{eff}$ größer als oder gleich dem Wärmeausdehnungskoeffizient des Bulk-Metalls des Widerstandselements (4) ist,
**dadurch gekennzeichnet,**
**dass** ausgehend von der Formel für $TCE_{eff}$ das Widerstandsthermometer passend zu einem erforderlichen Temperaturkoeffizienten TCR dimensioniert wird.

**Claims**

1. Resistance thermometer, consisting of several components, comprising at least one substrate (1), which is essentially made from a material whose thermal expansion coefficient is essentially greater than 10.5 ppp/K, at least one resistance element (4), which is arranged on the substrate (1), and at least one electrically isolating separation layer (2), which is essentially arranged between the resistance element (4) and the substrate (1),
wherein the components (1, 2, 3, 4, 5, 6) of the resistance thermometer are designed and harmonized with one another in such a way that a resulting effective thermal expansion coefficient $TCE_{eff}$ of the resistance thermometer corresponds to a predefinable value, wherein the effective thermal expansion coefficient $TCE_{eff}$ of the resistance thermometer essentially is defined approximately by the following formula:

$$TCE_{eff} = FORMULA$$

where N is the number of components of the resistance thermometer, the running number i designates the individual components, $TCE_i$ designates the thermal expansion coefficient, $d_i$ the thickness and $E_i$ the elasticity of the individual components, and where $F_i$ takes a geometrical factor into account,
in that the effective thermal expansion coefficient $TCE_{eff}$ is greater than or equal to the thermal expansion coefficient of the bulk metal of the resistance element (4), **characterized in that**
on the basis of the formula for $TCE_{eff}$, the resistance thermometer is sized to suit a necessary temperature coefficient TCR above 3900 ppm/K.

2. Resistance thermometer as claimed in Claim 1, **characterized in that**
the substrate (1) essentially consists of one material whose thermal expansion coefficient is essentially between 10.5 and 13.5 ppm/K.

3. Resistance thermometer as claimed in at least one of the previous claims, **characterized in that**
the resistance element (4) has a layer thickness of between 0.1 $\mu$m and 2 $\mu$m.

4. Resistance thermometer as claimed in Claim 1, **characterized in that**
the electrically isolating layer (2) has a thickness of between 0.5 $\mu$m and 50 $\mu$m.

5. Resistance thermometer as claimed in Claim 1 or 4, **characterized in that** the electrically isolating layer (2) has a thermal expansion coefficient of between 0.4 and 8 ppm/K.

6. Resistance thermometer as claimed in at least one of the previous claims, **characterized in that** at least one electrically isolating cover (5) is provided, which is essentially arranged on the side of the resistance element (4) facing away from the substrate (1).

7. Resistance thermometer as claimed in Claim 6, **characterized in that** the electrically isolating cover (5) has a thickness of between 0.5 $\mu$m and 100 $\mu$m.

8. Resistance thermometer as claimed in at least one of the previous claims, **characterized in that** the substrate (1) essentially consists of zirconium oxide.

9. Resistance thermometer as claimed in at least one of the previous claims, **characterized in that** the thickness of the substrate (1) is between 0.15 and 0.5 mm.

10. Resistance thermometer as claimed in at least one of the previous claims, **characterized in that** at least one inner compensation layer (3) is provided on the side of the substrate (1) facing away from the resistance element (4) and **in that** the properties of the inner compensation layer (3) are essentially identical to the isolating layer (2) with regard to a change in the expansion caused by the temperature.

11. Resistance thermometer as claimed in at least one of the previous claims, **characterized in that** at least one outer compensation layer (6) is provided on the side of the substrate (1) facing away from the resistance element (4) and **in that** the properties of the outer compensation layer (6) are essentially identical to the cover (5) with regard to a change in the expansion caused by the temperature.

12. Resistance thermometer as claimed in at least one of the previous claims, **characterized in that** the substrate (1) essentially consists of zirconium oxide, the substrate (1) has a thickness of between 0.3 and 0.5 mm, the resistance element (4) essentially consists of platinum, the resistance element (4) has a thickness of between 0.45 and 2 $\mu$m, the separation layer (2) has a thickness of between 0.5 and 40 $\mu$m and essentially consists of a glass ceramic with a thermal expansion coefficient of between 6 and 7.5 ppm/K, and the cover (5) has a thickness of between 5 and 40 $\mu$m and essentially consists of a glass ceramic with a thermal expansion coefficient of between 6 and 7.5 ppm/K.

13. Resistance thermometer as claimed in at least one of the previous claims, **characterized in that** the substrate (1) essentially consists of zirconium oxide, the substrate (1) has a thickness of between 0.3 and 0.5 mm, the resistance element (4) essentially consists of nickel, the resistance element (4) has a thickness of between 0.1 and 2 $\mu$m, the separation layer (2) has a thickness of between 0.5 and 40 $\mu$m the separation layer (2) essentially consists of a glass ceramic the separation layer (2) has a thermal expansion coefficient of between 6 and 7.5 ppm/K, and the cover (5) essentially consists of a polymer or glass.

14. Resistance thermometer as claimed in at least one of the previous claims, **characterized in that** the substrate (1) essentially consists of zirconium oxide, which is stabilized between 3 moles per cent and 11 moles per cent with scandium or between 0.5 mole per cent and 4 moles per cent with magnesium.

15. Procedure designed to produce a resistance thermometer, wherein the resistance thermometer consists of several parts, comprising at least one substrate (1), which is essentially made from a material whose thermal expansion coefficient is essentially greater than 10.5 ppp/K, at least one resistance element (4), which is arranged on the substrate (1), and at least one electrically isolating separation layer (2), which is essentially arranged between the resistance element (4) and the substrate (1), wherein the components (1, 2, 3, 4, 5, 6) of the resistance thermometer are designed and harmonized with one another in such a way that a resulting effective thermal expansion coefficient $TCE_{eff}$ of the resistance thermometer corresponds to a predefinable value, wherein the effective thermal expansion coefficient $TCE_{eff}$ of the resistance thermometer essentially is defined approximately by the following formula:

$$TCE_{eff} = FORMULA$$

where N is the number of components of the resistance thermometer, the running number i designates the individual components, $TCE_i$ designates the thermal expansion coefficient, $d_i$ the thickness and $E_i$ the elasticity of the individual components, and where $F_i$ takes a geometrical factor into account, in that the effective thermal expansion coefficient $TCE_{eff}$ is greater than or equal to the thermal expansion coefficient of the bulk metal of the resistance element (4), **characterized in that** on the basis of the formula for $TCE_{eff}$, the resistance thermometer is sized to suit a necessary temperature coefficient TCR.

## Revendications

1. Thermomètre à résistance électrique, constitué de plusieurs composants, comprenant au moins un substrat (1), qui est pour l'essentiel constitué d'un matériau dont le coefficient de dilatation thermique est pour l'essentiel supérieur à 10,5 ppp/K, au moins un élément résistif (4), qui est disposé sur le substrat (1), et au moins une couche de séparation électriquement isolante (2), qui est pour l'essentiel disposée entre l'élément résistif (4) et le substrat (1), les composants (1, 2, 3, 4, 5, 6) du thermomètre à résistance électrique étant conçus et assortis les uns aux autres de telle sorte qu'un coefficient de dilatation thermique effectif $TEC_{eff}$ résultant du thermomètre à résistance électrique correspond à une valeur prédéfinissable, le coefficient de dilatation thermique effectif $TEC_{eff}$ du thermomètre à résistance électrique étant défini approximativement et pour l'essentiel par la formule suivante :

$$TCE_{eff} = FORMULE$$

où N est le nombre de composants du thermomètre à résistance électrique, le numéro courant i désigne les différents composants, $TCE_i$ désigne le coefficient de dilatation thermique, $d_i$ l'épaisseur et $E_i$ l'élasticité des différents composants, et où $F_i$ tient compte d'un facteur géométrique, en ce que le coefficient de dilatation thermique effectif $TEC_{eff}$ est supérieur ou égal au coefficient de dilatation thermique du métal en vrac de l'élément résistif (4), **caractérisé** **en ce que**, sur la base de la formule pour $TCE_{eff}$, le thermomètre à résistance électrique est dimensionné de façon adaptée à un coefficient de température TCR nécessaire, supérieur à 3 900 ppm/K.

2. Thermomètre à résistance électrique selon la revendication 1, **caractérisé** **en ce que** le substrat (1) est constitué pour l'essentiel d'un matériau, dont le coefficient de dilatation thermique se situe pour l'essentiel entre 10,5 et 13,5 ppm/K.

3. Thermomètre à résistance électrique selon au moins l'une des revendications précédentes, **caractérisé** **en ce que** l'élément résistif (4) présente une épaisseur de couche comprise entre 0,1 $\mu$m et 2 $\mu$m.

4. Thermomètre à résistance électrique selon la revendication 1, **caractérisé** **en ce que** la couche de séparation électriquement isolante (2) présente une épaisseur comprise entre 0,5 $\mu$m et 50 $\mu$m.

5. Thermomètre à résistance électrique selon la revendication 1 ou 4, **caractérisé** **en ce que** la couche de séparation électriquement isolante (2) présente un coefficient de dilatation thermique compris entre 0,4 et 8 ppm/K.

6. Thermomètre à résistance électrique selon au moins l'une des revendications précédentes, **caractérisé** **en ce qu'**est prévue au moins une protection électriquement isolante (5), laquelle est disposée pour l'essentiel sur le côté opposé au substrat (1) de l'élément résistif (4).

7. Thermomètre à résistance électrique selon la revendication 6, **caractérisé** **en ce que** la protection électriquement isolante (5) présente une épaisseur comprise entre 0,5 $\mu$m et 100 $\mu$m.

8. Thermomètre à résistance électrique selon au moins l'une des revendications précédentes, **caractérisé** **en ce que** le substrat (1) est constitué pour l'essentiel d'oxyde de zirconium.

9. Thermomètre à résistance électrique selon au moins l'une des revendications précédentes, **caractérisé** **en ce que** l'épaisseur du substrat (1) est comprise entre 0,15 et 0,5 mm.

10. Thermomètre à résistance électrique selon au moins l'une des revendications précédentes, **caractérisé** **en ce que** sur le côté opposé à l'élément résistif (4) du substrat (1) est prévue au moins une couche de compensation intérieure (3) et en ce que la couche de compensation intérieure (3) est constituée pour l'essentiel de façon identique à la couche de séparation (2) en ce qui concerne le changement de dilatation occasionné par la température.

11. Thermomètre à résistance électrique selon au moins l'une des revendications précédentes, **caractérisé** **en ce que** sur le côté opposé à l'élément résistif (4) du substrat (1) est prévue au moins une couche de compensation extérieure (3) et en ce que la couche de compensation extérieure (3) est constituée pour l'essentiel de façon identique à la protection (5) en ce qui concerne le changement de dilatation occasionné par la température.

12. Thermomètre à résistance électrique selon au moins l'une des revendications précédentes, **caractérisé** **en ce que** le substrat (1) est constitué pour l'essentiel d'oxyde de zirconium, **en ce que** le substrat (1) présente une épaisseur comprise entre 0,3 et 0,5 mm, en ce que l'élément résistif (4) est constitué pour l'essentiel de platine, **en ce que** l'élément résistif (4) présente une épaisseur comprise entre 0,45 et 2 μm, **en ce que** la couche de séparation (2) présente une épaisseur comprise entre 0,5 et 40 μm et est constituée pour l'essentiel d'une vitrocéramique avec un coefficient de dilatation thermique compris entre 6 et 7,5 ppm/K, et **en ce que** la protection (5) présente une épaisseur comprise entre 5 et 40 μm et est pour l'essentiel constituée d'une vitrocéramique avec un coefficient de dilatation thermique compris entre 6 et 7,5 ppm/K.

13. Thermomètre à résistance électrique selon au moins l'une des revendications 1 à 11, **caractérisé** **en ce que** le substrat (1) est constitué pour l'essentiel d'oxyde de zirconium, **en ce que** le substrat (1) présente une épaisseur comprise entre 0,3 et 0,5 mm, en ce que l'élément résistif (4) est constitué pour l'essentiel de nickel, **en ce que** l'élément résistif (4) présente une épaisseur comprise entre 0,1 et 2 μm, **en ce que** la couche de séparation (2) présente une épaisseur comprise entre 0,5 et 40 μm, **en ce que** la couche de séparation (2) est constituée pour l'essentiel d'une vitrocéramique, **en ce que** la couche de séparation (2) présente un coefficient de dilatation thermique compris entre 6 et 7,5 ppm/K, et **en ce que** la protection (5) est pour l'essentiel constituée d'un polymère ou de verre.

14. Thermomètre à résistance électrique selon au moins l'une des revendications précédentes, **caractérisé** **en ce que** le substrat (1) est pour l'essentiel constitué d'oxyde de zirconium, lequel est stabilisé entre 3 moles pour cent et 11 moles pour cent avec du scandium ou entre 0,5 mole pour cent et 4 moles pour cent avec du magnésium.

15. Procédé destiné à la fabrication d'un thermomètre à résistance électrique, le thermomètre à résistance électrique étant constitué de plusieurs composants, comprenant au moins un substrat (1), qui est pour l'essentiel constitué d'un matériau dont le coefficient de dilatation thermique est pour l'essentiel supérieur à 10,5 ppp/K, au moins un élément résistif (4), qui est disposé sur le substrat (1), et au moins une couche de séparation électriquement isolante (2), qui est pour l'essentiel disposée entre l'élément résistif (4) et le substrat (1), les composants (1, 2, 3, 4, 5, 6) du thermomètre à résistance électrique étant conçus et assortis les uns aux autres de telle sorte qu'un coefficient de dilatation thermique effectif $TEC_{eff}$ résultant du thermomètre à résistance électrique correspond à une valeur prédéfinissable, le coefficient de dilatation thermique effectif $TEC_{eff}$ du thermomètre à résistance électrique étant défini approximativement et pour l'essentiel par la formule suivante :

$$TCE_{eff} = FORMULE$$

où N est le nombre de composants du thermomètre à résistance électrique, le numéro courant i désigne les différents composants, $TCE_i$ désigne le coefficient de dilatation thermique, $d_i$ l'épaisseur et $E_i$ l'élasticité des différents composants, et où $F_i$ tient compte d'un facteur géométrique, en ce que le coefficient de dilatation thermique effectif $TEC_{eff}$ est supérieur ou égal au coefficient de dilatation thermique du métal en vrac de l'élément résistif (4), **caractérisé** **en ce que**, sur la base de la formule pour $TCE_{eff}$, le thermomètre à résistance électrique est dimensionné de façon adaptée à un coefficient de température TCR nécessaire.

# Fig. 1

## IN DER BESCHREIBUNG AUFGEFÜHRTE DOKUMENTE

**In der Beschreibung aufgeführte Patentdokumente**

- DE 4300084 A1
- DE 19540194 C1
- EP 0471138 A2